# EUROPEAN PATENT APPLICATION

(11) **EP 4 844 975 A1**
(43) Date of publication of application: **25.11.2026**
(21) Application number: 26178595.0
(22) Date of filing: 13.05.2026
(51) Int. Cl.: H02J 3/38, H02J 3/46, H02J 101/28

(54) **METHOD AND ARRANGEMENT FOR INCREASING STABILITY IN AN ELECTRICITY GRID**

(30) Priority: 22.05.2025 FI 20255384
(71) Applicant: UPM Energy Oy, 00100 Helsinki (FI)
(72) Inventor: HAROMO, Juha, 00100 Helsinki (FI)
(74) Representative: Papula Oy

(57) **Abstract**

For increasing stability in an electricity grid, at least one wind power generator is run at a respective output power level. The AC frequency of the grid is monitored to detect deviations from a nominal frequency value and a rate of change. In response to detecting a deviation, a change in the respective output power level from a first output power level to a second output power level is initiated and the electric energy produced by the at least one wind power generator supplied to the grid. In response to detecting the rate of change, electric energy is made to flow between a rechargeable electric energy storage and the grid.

## Description

### FIELD OF THE INVENTION

The invention concerns generally the use of power sources to maintain a steady and sufficient supply of electric energy to an electricity grid. In particular the invention concerns the combined use of one or more rechargeable energy storages together with one or more wind power plants to stabilize the operation of the electricity grid.

### BACKGROUND OF THE INVENTION

A high-voltage grid is the geographically distributed backbone of electricity transmission. Power stations supply the grid with electric energy, and at the consuming end are industrial companies, distribution network companies, and ultimately individual households. Losses in the grid sum up with the actual loads to form the total demand of electric power. All users should receive a sufficient amount of electric power at all times, and the AC frequency of the grid should remain as stable as possible. Simultaneously the use of energy sources should be optimized and mechanical stress on power generators reduced. It is important to maintain a balance between supply and demand in the grid.

The AC frequency of the grid constitutes a relatively reliable indicator of the balance between supply and demand, so that excessive demand lowers the frequency and vice versa. The operator responsible for the grid may decide how various levels of frequency variation will trigger the use of power reserves. For example, in a grid the nominal AC frequency of which is 50 Hz, normal operation reserves may be used to maintain the frequency error below 0.2%, i.e. between 49.9 and 50.1 Hz. If the frequency decreases below 49.9 Hz and all normal operation reserves are in use already, disturbance reserves are taken into use.

Conventionally, many types of power plants involve rotating synchronous machinery, in which the large, rotating mass acts as a natural stabilizer against frequency variations in the electricity grid. However, producing electric energy from other sources, such as wind and solar power for example, may not involve any similar inherent stabilizing effect. Their coupling to the grid may involve electronic inverters and frequency conversion technology operating under distributed, computerized control. While the use of renewable and pollution-free energy sources has its unquestionable advantages, the lack of inertia may lead to challenges in grid stabilization if the proportional amount of production with low inertia in the grid becomes large. Very unfavorable is for example a situation in which the controllers of a plurality of power-generating units begin to make mutually competing corrective changes, causing degrading stability in the form of the controlled variable - like grid AC frequency - oscillating back and forth.

### SUMMARY

It is an objective of the invention to present a method and arrangement for using wind power and rechargeable energy storage in a way that stabilizes the electricity grid against unfavorable changes. A particular objective of the invention is that the combination of wind power and rechargeable storage could be made to respond to detected changes in the electricity grid in a timely and accurate manner. A further objective of the invention is that the method and arrangement of the kind described above can be scaled to the needs of electricity grids of different size and composition. A further objective of the invention is that the method and arrangement of the kind described above can reduce or minimize mechanical stress on wind power generators during changes to generator output power, and hence prevent or retard the wear of the generator components.

The objectives of the invention are achieved by using a detected and/or predicted rate of change as a decision criterion when employing corrective measures.

A method according to the invention is characterized by the features recited in the independent claim directed to a method.

An arrangement according to the invention is characterized by the features recited in the independent claim directed to an arrangement.

A computer program according to the invention comprises one or more sets of one or more machine-executable instructions that, when executed by one or more processors, are configured to cause the performing of a method of the kind described above. The computer program may be embodied on a volatile or a non-volatile computer-readable record medium, for example as a computer program product comprising at least one computer readable non-transitory medium having program code stored thereon.

Advantageous embodiments are presented in the dependent claims.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a plurality of wind power generators in a wind farm;
**Figure 2** illustrates a schematic construction of a wind power generator;
**Figure** 3 illustrates an arrangement according to an embodiment;
**Figure** 4 illustrates a method according to an embodiment;
**Figure** 5 illustrates an example of frequency measurements and energy flows;
**Figure** 6 illustrates an example of frequency measurements and energy flows; and
**Figure** 7 illustrates a method according to an embodiment.

### DETAILED DESCRIPTION

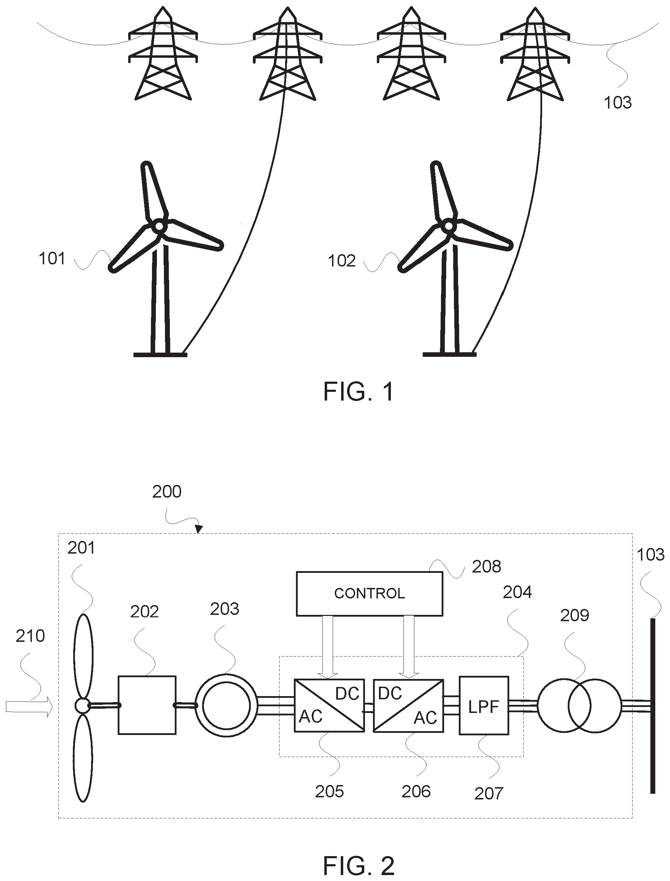

Fig. 1 illustrates schematically a first wind power plant 101 and a second wind power plant 102 that are located within a wind farm (wind park) coupled to an electricity grid 103. The way in which the wind power generators supply electric energy to the grid 103 is based on an agreement between the operator of the wind power plant and the operator of the electricity grid.

Fig. 2 illustrates schematically a wind power generator 200. The wind power generator 200 comprises a turbine 201 and an associated generator 203. The generator 203 may be any type of electrical generator (alternator), for example, a wound rotor synchronous generator (WRSG), permanent magnet synchronous generator (PMSG), or a squirrel-cage induction generator (SCIG). The wind power generator 200 may comprise a gearbox 202 or the construction may be gearless. The wind power generator 200 further comprises a power converter 204 which may be a full-scale back-to-back frequency converter configured to convert generated electrical frequency to a frequency that is suitable for the grid 103. The converter may comprise an AC to DC converter 205, a DC to AC converter 206, and a low-pass filter (LPF) 207. A control system 208 is configured to control the operation of the converter 204. A controllable coupling 209 couples the generator 200 to the electricity grid 103. One wind power plant may comprise a plurality of individually controllable wind power generators 200. The spinning speed of the turbine 201 and consequently the output power level of the wind power generator is dependent on, for example, wind 210 conditions and the blade configuration of the turbine 201.

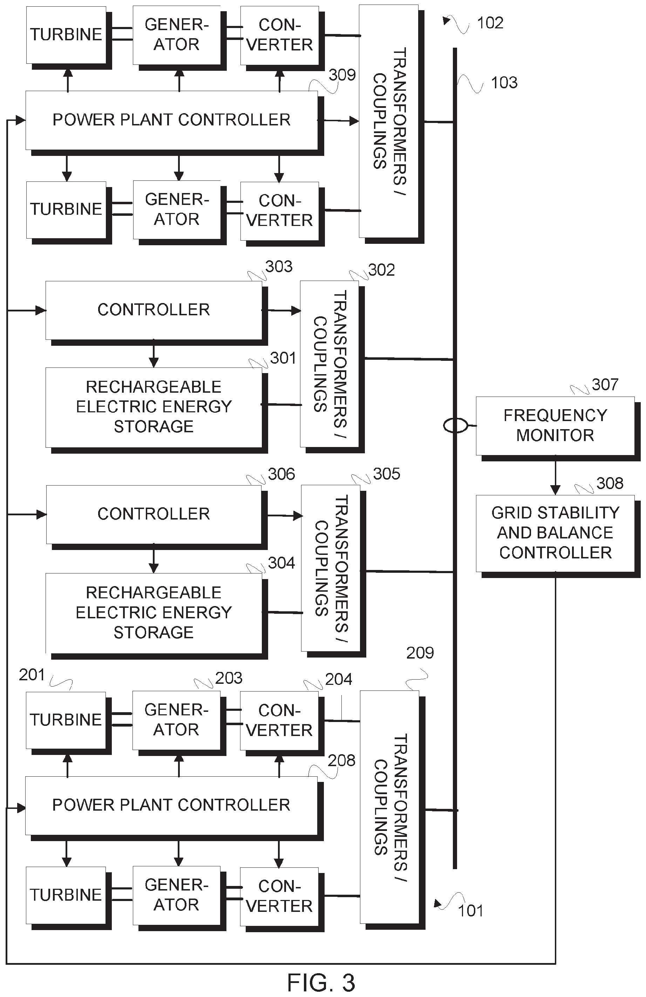

Fig. 3 illustrates an arrangement with which wind power can be used as a power reserve of an electricity grid. The arrangement of fig. 3 comprises a plurality of wind power generators coupled to supply electric energy to an electricity grid 103. In this example the wind power generators are located in two separate wind power plants 101 and 102. An example of a wind power generator is the wind power generator of the first wind power plant 101, comprising a turbine 201, an associated generator 203, a converter 204, and a controller 208.

As a difference to the system of fig. 1 and fig. 2, the arrangement of fig. 3 comprises one or more rechargeable electric energy storages, of which rechargeable electric energy storages 301 and 304 are shown as examples. A rechargeable electric energy storage such as those shown as 301 and 304 may comprise an electrochemical rechargeable battery, a capacitor, a supercapacitor, or some combination of one or more such individual entities.

The arrangement comprises also a controllable coupling 302 or 305 between the respective rechargeable electric energy storage 301 or 304 and the electricity grid 103. The controllable coupling 302 or 305 may be a bidirectional coupling, so that it can be made to allow electric energy to flow in both directions between the respective rechargeable electric energy storage 301 or 304 and the electricity grid 103. The controllable coupling 302 or 305 may comprise controllable switching components, as well as components needed to match the respective rechargeable electric energy storage 301 or 304 and the electricity grid 103 electrically to each other. For example, if the rechargeable electric energy storage 301 or 304 is or comprises a DC device, the respective controllable coupling 302 or 305 may comprise an inverter for converting DC power taken from the rechargeable electric energy storage 301 or 304 to AC power before feeding it into the electricity grid 103. The controllable coupling 302 or 305 may comprise transformers and/or other kind of voltage level converters. The controllable coupling 302 or 305 may comprise a rectifier for converting AC power taken from the electricity grid 103 to DC power before feeding it into the respective rechargeable electric energy storage 301 or 304.

Controllers 303 and 306 are shown separately in fig. 3, configured to control the respective rechargeable electric energy storage 301 or 304 as well as the controllable coupling 302 or 305 between it and the electricity grid 103. The controller functionality may also be partly or wholly integral with the respective rechargeable electric energy storage 301 or 304 and/or the controllable coupling 302 or 305.

The arrangement of fig. 3 comprises a frequency monitor 307 that is configured to monitor an AC frequency of the electricity grid 103. The frequency monitor may comprise or be coupled to a flywheel oscillator arrangement to ensure adequate accuracy of the monitoring. A control system 308 is coupled to receive detection information from the frequency monitor 307 and configured to control at least some of the rechargeable electric energy storages 301 and 304 and the wind power plants 301 and 302, through the respective controllers 303, 306, 208, and 309.

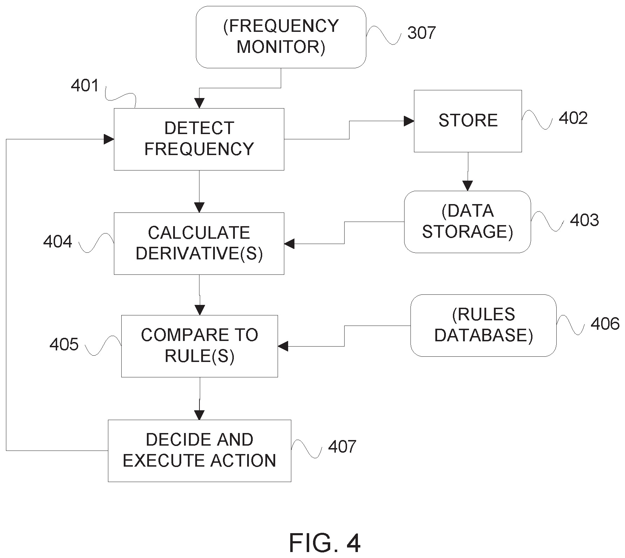

Fig. 4 illustrates a method according to an embodiment, shown here in the form of a flow diagram. It is also possible to read fig. 4 as an illustration of an arrangement, in terms of how certain parts of the arrangement are made to operate.

Reference designators 401, 402, 403, and 404 in fig. 4 illustrate the monitoring of an AC frequency of an electricity grid to detect a rate of change of the AC frequency. Here it is assumed that at least one wind generator is run at a respective output power level, for the purpose of supplying electric energy to the electricity grid. It is important to note that not (only) the actual frequency value of the grid is monitored, but also its rate of change. In fig. 4 this is schematically illustrated so that reference designator 401 illustrates detecting a momentary frequency of the grid, reference designator 402 illustrates storing the detected frequency value in a data storage 403, and reference designator 404 illustrates using at least some of the most recently detected momentary frequency values to calculate one or more time derivatives.

Reference designator 405 in fig. 4 illustrates comparing one or more of the calculated one or more time derivatives to one or more rules read from a rules database 406. The purpose of the comparison(s) is to find out, whether the detected rate of change, i.e. the value of one or more of the calculated one or more time derivatives, is such that it should be reacted upon and if so, how. A decision about such reacting and the execution of the decided action are represented with reference designator 407 in fig. 4.

One advantageous way of responding to detecting a deviation of the AC frequency from a nominal frequency value is to initiate a change in the respective output power level from a first output power level to a second output power level, and, in response to detecting a rate of change of the AC frequency, to make electric energy flow between a rechargeable electric energy storage and the electricity grid, at least until the respective output power level reaches the second output power level. In such a case, the rate at which electric energy is made to flow between the rechargeable electric energy storage and the electricity grid should be decided so that the electric energy flowing between the rechargeable electric energy storage and the electricity grid counteracts the detected change of the AC frequency. In particular, it should counteract the detected change of the AC frequency in a direction defined by a sign of the detected change of rate of the AC frequency, thus creating a "synthetic inertia" in the system. The absolute magnitude or efficiency at which the electric energy flowing between the rechargeable electric energy storage and the electricity grid counteracts the detected change of the AC frequency should be proportional to an absolute value of the detected rate of change of the AC frequency.

For conciseness of expression, the rechargeable electric energy storage is called a battery bank in the following. This choice of wording is not limiting, as other kinds of rechargeable electric energy storages, such as those mentioned earlier in this text for example, are conceptually covered as well.

The principle explained above with reference to fig. 4 may be characterized so that the forced flow of electric energy between the battery bank and the electricity grid increases the stability of the electricity grid by providing the "synthetic inertia" to the electricity grid. If the AC frequency of the grid is found to decrease, electric energy is made to flow from the battery bank into the electricity grid. Correspondingly, if the AC frequency of the grid is found to increase, electric energy is made to flow from the electricity grid into the battery bank.

There is an important difference between this principle and the mere use of a battery bank to counteract frequency deviations. In the latter, the straightforward aim is to just drive the AC frequency towards its nominal value, like 50 Hz for example. So, in the mere use of a battery bank to counteract frequency deviations, if a detected momentary frequency is below the nominal value, indicating excessive demand of electric energy, one makes electric energy flow from the battery bank to the grid, thus increasing supply. Or if a detected momentary frequency is above the nominal value, indicating excessive supply of electric energy, one makes electric energy flow from the grid to the battery bank, thus increasing demand.

As a comparison, in the principle shown in fig. 4 events of for example the following kind are possible and even likely to occur. Let us assume that the second latest detected AC frequency value was 49.92 Hz and the latest detected AC frequency value was 49.94 Hz. In other words, the detected AC frequency is below the nominal value 50 Hz. However, because the latest calculated time derivative of first order is positive, i.e. the detected AC frequency of the grid is increasing, as a response electric energy is made to flow from the grid to the battery bank. If the detected AC frequency values were the other way round, indicating an ongoing change from 49.94 Hz to 49.92 Hz, the latest calculated time derivative of first order would be negative. As a response, electric energy would be made to flow from the battery bank to the grid. In both cases all detected AC frequency values were below the nominal value 50 Hz, but the direction of the forced flow of electric energy between the grid and the battery bank was different depending on the sign of the latest calculated time derivative.

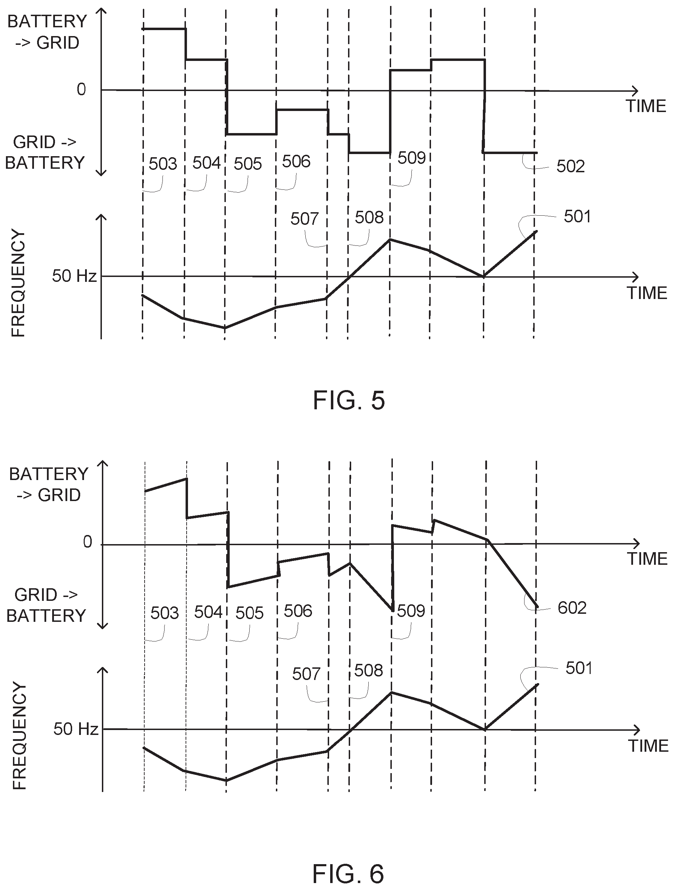

In fig. 5, the lower graph 501 illustrates a fictitious time series of detected AC frequency values of the electricity grid. For simplicity of illustration, it is assumed that the detected AC frequency values are such that the graph forms a simple polygonal chain consisting of straight segments between points that occur at constant intervals of time. Some of the detected AC frequency values are below the nominal frequency 50 Hz while others are above it.

The upper graph 502 illustrates the direction and magnitude of a forced flow of electric energy between a battery bank and the electricity grid. Values of the graph 502 above the zero line represent electric energy flowing from the battery bank to the grid, while values below the zero line represent electric energy flowing from the grid to the battery bank.

In conformity with the principle explained above with reference to fig. 4, whenever a segment in the frequency graph 501 goes generally downwards (i.e. has a negative time derivative of first order), the corresponding segment in the energy graph 502 is above the zero line. Correspondingly, for each segment in the frequency graph 501 that goes generally upwards (i.e. has a positive time derivative of first order), the corresponding segment in the energy graph 502 is below the zero line.

A further feature is related to the vertical distances between the segments of the energy graph 502 and the zero line. For each segment, the vertical distance represents the absolute magnitude of the rate at which electric energy is made to flow between the battery bank and the grid. In general, the absolute magnitude is proportional to an absolute value of the detected rate of change of the AC frequency of the grid. In fig. 5 this means that the steeper a segment is in the frequency graph 501, the further away from the zero line is the corresponding segment in the energy graph 502. For example, between the first two vertical lines 503 and 504 the frequency graph 501 descends relatively steeply, and the corresponding segment in the energy graph 502 is relatively far away from the zero line. Between vertical lines 504 and 505 the frequency graph 501 descends less steeply, and the corresponding segment in the energy graph 502 is closer to the zero line.

A further, advantageous but not mandatory feature is seen in fig. 5 by comparing the graphs in the slots between vertical lines 503 and 504 on one hand and between 505 and 506 on the other hand. In the first-mentioned slot, the time derivative of the frequency graph 501 is negative, while in the other slot it is positive. Correspondingly, in the first-mentioned slot the energy graph 502 is above the zero line while in the other slot it is below the zero line. The absolute value of the time derivative of the frequency graph is about the same in both slots: in the first-mentioned slot the graph descends about as steeply as it ascends in the other slot. However, the vertical distance between the segment of the energy graph 502 and the zero line is larger in the first-mentioned slot than in the other slot.

In each case, a coefficient of proportionality could be used to describe the proportionality of the absolute magnitude of the flow rate of electric energy to the absolute value of the detected rate of change in the AC frequency of the grid. The difference between the slots between vertical lines 503 and 504 on one hand and between 505 and 506 on the other hand reflects the fact that, for at least one predetermined absolute value of the detected rate of change of the AC frequency, the coefficient of proportionality is made larger if the detected rate of change is away from the nominal value of the AC frequency than if the detected rate of change is towards the nominal value of the AC frequency.

Remembering that the "synthetic inertia" introduced by an energy flow to or from the battery bank basically opposes any change in the grid frequency, be it a change away from or towards the nominal frequency, the described difference in the coefficient of proportionality means that one opposes more strongly those changes that are directed away from the nominal frequency than those directed towards the nominal frequency. Another prominent example of this is seen in the slot between lines 507 and 509, where the detected frequency change in first towards the nominal frequency between lines 507 and 508 and then away from it between lines 508 and 509. The first-order time derivative of the frequency graph 501, i.e. the detected rate of change in AC frequency of the grid, remains at a constant positive value between lines 507 and 509, and correspondingly the energy graph 502 remains below the zero line. However, the coefficient or proportionality jumps to a larger value at line 508 when the detected change in frequency changes from being towards the nominal value to being away from it.

Fig. 6 reflects some further possible modifications of the basic principle. The frequency graph 501 is the same as in fig. 5. However, the segments of the energy graph 602 are not horizontal. This reflects the fact that, in addition to the rate of change of the AC frequency, the method comprises detecting an absolute deviation of the AC frequency from the nominal frequency value. The method comprises making electric energy flow between the battery bank and the electricity grid at an absolute magnitude proportional to the absolute deviation. For example, in the slot between lines 503 and 504, the absolute deviation increases towards the end of the slot and, correspondingly, electric energy is made to flow between the battery bank and the electricity grid at a rate that increases towards the end of the slot.

If the last-mentioned principle is applied, suitable relative weights for the dependence on detected rate of change and the dependence on detected absolute deviation can be found by experimenting.

Referring back to fig. 3, if there are multiple battery banks (or, more generally, multiple rechargeable energy storages 301 and 304) available, the method may comprise responding to a detected rate of frequency change by making a selection among the plurality of available rechargeable electric energy storages 301 and 304. As a result of such selection, electric energy is made to flow between the electricity grid 103 and a selected one or selected ones of the plurality of rechargeable electric energy storages 301, 304. At least one rechargeable energy storage may be selected to provide synthetic inertia by just opposing a detected frequency change, while at least one other rechargeable energy storage may be used to straightforwardly counteract detected deviations from the nominal frequency.

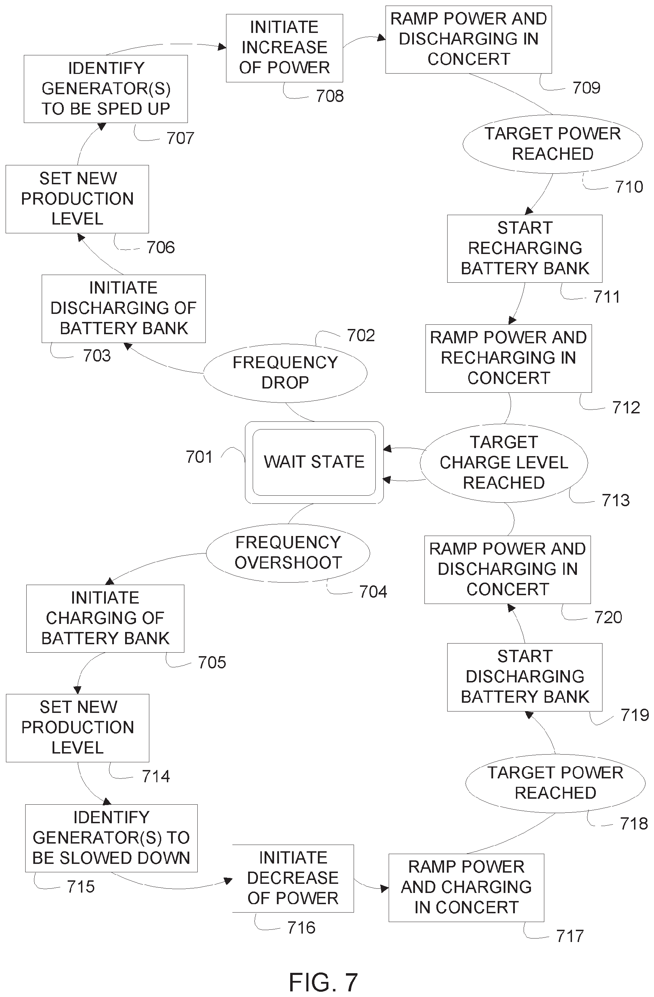

Fig. 7 illustrates an example of how, together with any of the stabilizing strategies explained above by fig. 5 and 6, the production of electric energy at wind power plants and compensating action by one or more rechargeable electric energy storages may be controlled. Such controlling may also reduce mechanical stress on the plurality wind power generators when total power output level of the plurality of wind power generators is changed, and hence prevent or retard the wear of the generator components. In the wait state 701 each of the plurality of wind power generators is run at its respective output power level to supply electric energy at a total output power to the electricity grid. The wait state 701 comprises also monitoring the AC frequency of the electricity grid to detect deviations from a default frequency range.

As a response to detecting a deviation from a nominal frequency value, electric energy is made to flow between a rechargeable electric energy storage and the electricity grid. In the following, all types of rechargeable electric energy storages are again referred to as battery banks for conciseness, without actually being limited thereto. As a first example we may assume that the deviation was a frequency drop 702, so a process of discharging electric energy from the battery bank to the electricity grid is initiated as illustrated by state 703. Had a frequency overshoot 704 been detected, the corresponding change of state would have led to state 705, in which a process was initiated to charge the battery bank with electric energy drawn from the electricity grid.

In fig. 7, following or simultaneously with initiating discharging of the battery bank at state 703, the control system proceeds to set a new total power output level at state 706 and to identify at state 707 that wind power generator (or those wind power generators) that will be used to generate the required additional electric power.

The control system then initiates a change in the total output power of the plurality of wind power generators from a first total output power level to a second total output power level. Initiating the increase in the total output power corresponds to state 708 in fig. 7. The increase in the total output power may be initiated in such a way that the mechanical stress induced on the wind power generator used to generate the required additional electric power is minimized due to simultaneously discharging electric energy from the battery bank to the electricity grid. Simultaneously or substantially simultaneously the control system begins to reduce the power at which electric energy is fed from the battery bank to the electricity grid.

Changing the two powers in concert, as illustrated with state 709 in fig. 7, means that for a while, the sum of electric powers fed into the electricity grid from the plurality of wind power generators on one hand and the battery bank on the other hand remains constant. In other words, the power at which electric energy flows between the battery bank and the electricity grid is dynamically controlled to correspond to a remaining difference between a momentary output power of the plurality of wind power generators and the second total output power level.

At a certain moment the target total output power level of the plurality of wind power generators is reached (see condition 710 in fig. 7). The battery bank needs to be restored into its default state of charge, for which reason the total output power of the plurality of wind power generators can be made to continue changing in the same direction until a second, later moment of time. Recharging the battery is illustrated with state 711 in fig. 7.

At a yet further moment the changes in total output power of the plurality of wind power generators are stopped, so that the total output power is slightly above the eventually desired "second" output power level. The total output power of the plurality of wind power generators is eventually returned to the second total output power level at a third, even later moment of time. Meanwhile, the battery bank is recharged because it had most recently been discharging. In other words, the excess electric energy produced by the plurality of wind power generators is conducted into the battery bank according to some selected battery recharging strategy. If the originally detected deviation had been a frequency overshoot, restoring the battery bank into its default state of charge would involve discharging it, because in that case it had been charging before the first moment of time.

The power at which the battery bank is recharged may be significantly lower than the power at which it was discharged, but this is only an illustrative example, and the selected recharging power level can be selected on the basis of appropriate knowledge of the electric characteristics of the battery bank (or, more generally: the electric energy storage). In order to maintain the net power available for others in the electricity grid constant, it is advisable to make reciprocal changes in the total output power of the plurality of wind power generators and the power at which electric energy flows between the electric energy storage and the electricity grid until a target charge level of the electric energy storage has been reached. In fig. 7, such reciprocal changes constitute a part of state 712. Reaching the default or target charge level of the battery bank as in condition 713 of fig. 7 causes a transition back to the wait state 701.

The lower part of the state diagram in fig. 7 is essentially a mirror image of the upper part, with all frequency- and power-related terms inverted. Thus, for example, while state 707 comprised identifying that wind power generator or those wind power generators that were to be sped up, the corresponding mirror image state 715 comprises identifying that wind power generator or those wind power generators that are to be slowed down. State 716 comprises initiating a decrease in the total output power, and this decrease may be initiated in such a way that the mechanical stress induced on the wind power generator(s) to be slowed down is minimized due to simultaneously charging electric energy from the electricity grid to the battery bank.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for increasing stability in an electricity grid, comprising:
running at least one wind power generator at a respective output power level, to supply electric energy to the electricity grid;
monitoring an AC frequency of the electricity grid to detect deviations of the AC frequency from a nominal frequency value and a rate of change of the AC frequency;
performing, in response to detecting a deviation from the nominal frequency value, the following:
initiating a change in the respective output power level from a first output power level to a second output power level; and
supplying the electric energy produced by the at least one wind power generator to the electricity grid; and
making, in response to detecting the rate of change of the AC frequency, at least until the respective output power level reaches the second output power level, electric energy flow between a rechargeable electric energy storage and the electric grid, wherein a rate at which the electric energy is made to flow between the rechargeable electric energy storage and the electricity grid is decided so that the electric energy flowing between the rechargeable electric energy storage and the electricity grid counteracts the detected rate of change of the AC frequency
- in a direction defined by a sign of the detected rate of change of the AC frequency and
- at an absolute magnitude proportional to an absolute value of the detected rate of change of the AC frequency.

2. A method according to claim 1, wherein, for at least one predetermined absolute value of the detected rate of change of the AC frequency, a coefficient of the proportionality is made larger if the detected rate of change is away from the nominal frequency value than if the detected rate of change is towards the nominal frequency value.

3. A method according to any of claims 1 or 2, further comprising:
making, in response to detecting an absolute deviation from the nominal frequency value, at least until the respective output power level reaches the second output power level, electric energy flow between the rechargeable electric energy storage and the electricity grid at an absolute magnitude proportional to the absolute deviation of the AC frequency.

4. A method according to any of the preceding claims, comprising:
making, in response to the detecting the rate of change of the AC frequency, a selection among a plurality of available rechargeable electric energy storages, so that as a result of the selection, electric energy is made to flow between the electricity grid and a selected one or selected ones of the plurality of rechargeable electric energy storages.

5. A method according to any of the preceding claims, comprising:
running a plurality of wind power generators, each at a respective output power level;
performing, in response to detecting the deviation from the nominal frequency value, the following:
initiating a change in at least one of the respective output power levels of the plurality of wind power generators from a first output level to a second output power level to make a total output power level of the plurality of wind power generators change from a first total output power level to a second total output power level;
supplying the electric energy produced by the plurality of wind power generators to the electricity grid; and
making, at least until the total output power level reaches the second total output power level, electric energy flow between the rechargeable electric energy storage or at least one of the plurality of rechargeable electric energy storages.

6. An arrangement for using wind power as a power reserve of an electricity grid, comprising:
a rechargeable electric energy storage;
a controllable coupling between the rechargeable electric energy storage and the electricity grid;
at least one wind power generator coupled to supply electric energy to the electricity grid;
a frequency monitor configured to monitor an AC frequency of the electricity grid;
a control system coupled to receive detection information from the frequency monitor and configured to control the controllable coupling and an output power level of the at least one wind power generator;
wherein the control system is configured to respond to detection information indicative of a deviation of the AC frequency from a nominal frequency value by:
initiating a change in a respective output power level of the at least one wind power generator from a first output power level to a second output power level; and
supplying the electric energy produced by the at least one wind power generator to the electricity grid; and
wherein the control system is configured to respond to detection information indicative of a rate of change of the AC frequency by:
deciding a rate at which electric energy is made to flow between the rechargeable electric energy storage and the electricity grid so that such electric energy made to flow between the rechargeable electric energy storage and the electricity grid is to counteract the detected rate of change of the AC frequency
- in a direction defined by a sign of the rate of change of the AC frequency and
- at an absolute magnitude proportional to an absolute value of the detected rate of change of the AC frequency; and
making electric energy flow between the rechargeable electric energy storage and the electricity grid at the decided rate.

7. An arrangement according to claim 6, wherein the control system is further configured to, for at least one predetermined absolute value of the detected rate of change of the AC frequency, make a coefficient of the proportionality larger if the detected rate of change is away from the nominal frequency value than if the detected rate of change is towards the nominal frequency value.

8. An arrangement according to any of claims 6 or 7, wherein the control system is further configured to:
respond to detection information indicative of an absolute deviation of the AC frequency from the nominal frequency value by making electric energy flow between the rechargeable electric energy storage and the electricity grid at an absolute magnitude proportional to the absolute deviation.

9. An arrangement according to any of claims 6 to 8, wherein:
the arrangement comprises a plurality of rechargeable electric energy storages; and
the control system is configured to respond to detection information indicative of the rate of change of the AC frequency by making a selection among the plurality of rechargeable electric energy storages, so that as a result of the selection, electric energy is made to flow between the electricity grid and a selected one or selected ones of the plurality of rechargeable electric energy storages.

10. An arrangement according to any of claims 6 to 9, wherein:
the arrangement comprises a plurality of wind power generators; and
the control system is configured to respond to detection information indicative of the deviation of the AC frequency from the nominal frequency value by:
initiating a change in the output power level of at least one of the plurality of wind power generators from a first output power level to a second output power level to make a total output power level of the plurality of wind power generators change from a first total output power level to a second output power level;
supplying the electric energy produced by the plurality of wind power generators to the electricity grid; and
making, at least until the total output power level of the plurality of wind power generators reaches the second total output power level, electric energy flow between the electricity grid and the rechargeable electric energy storage or at least one of the plurality of rechargeable electric energy storages.
